# EUROPÄISCHE PATENTSCHRIFT

(11) **EP 1 321 000 B1**
(45) Veröffentlichungstag und Bekanntmachung des Hinweises auf die Patenterteilung: **07.11.2007**
(21) Anmeldenummer: 01978118.6
(22) Anmeldetag: 11.09.2001
(51) Int. Cl.: H04Q 3/00, H04Q 11/04

(54) **VERFAHREN UND GATEWAYEINRICHTUNG ZUM UMSETZEN EINER LEISTUNGSMERKMAL-STEUERSIGNALISIERUNG BEIM ÜBERGANG ZWISCHEN UNTERSCHIEDLICHEN KOMMUNIKATIONSNETZEN**
METHOD AND GATEWAY DEVICE FOR CONVERTING A FEATURE CONTROL SIGNALING WHEN CHANGING BETWEEN DIFFERENT COMMUNICATIONS NETWORKS
PROCEDE ET DISPOSITIF PASSERELLE PERMETTANT LA CONVERSION D'UNE SIGNALISATION DE COMMANDE DE CARACTERISTIQUES DE SERVICES LORS DU TRANSFERT ENTRE DES RESEAUX DE COMMUNICATION DIFFERENTS

(30) Priorität: 29.09.2000 DE 10048484
(43) Veröffentlichungstag der Anmeldung: 25.06.2003
(73) Patentinhaber: SIEMENS AKTIENGESELLSCHAFT, 80333 München (DE)
(72) Erfinder: TOTZKE, Jürgen, 85586 Poing (DE)
(86) Internationale Anmeldenummer: PCT/DE2001/003491
(87) Internationale Veröffentlichungsnummer: WO 2002/028112

(56) Entgegenhaltungen:
- EP-A- 1 005 239
- EP-A- 1 093 313
- WO-A-00/39960
- WO-A-97/16007
- WO-A-99/05590

## Beschreibung

In zeitgemäßen Kommunikationssystemen werden Verbindungen, z.B. zur Sprach, Video-, Multimedia- und/oder Datenkommunikation, die traditionell über leitungsvermittelte Kommunikationsnetze geleitet werden, in zunehmendem Maße auch über paketvermittelte Kommunikationsnetze, wie z.B. sog. Lokale Netze oder das Internet, vermittelt. Auf dieser Technik basiert beispielsweise die sog. Internettelefonie, die häufig auch als "Voice over Internet Protocol" (VoIP) bezeichnet wird.

Beim Übergang einer Verbindung zwischen einem leitungsvermittelten und einem paketvermittelten Kommunikationsnetz ist in der Regel aufgrund der sich unterscheidenden Übertragungs- und Signalisierungsprotokolle eine Umsetzung einer zur Verbindungskontrolle vorgesehenen Steuersignalisierung erforderlich. Neben einer Realisierung eines netzübergreifenden Auf- und Abbaus von Verbindungen stellt sich hierbei insbesondere das Problem auch eine netzübergreifende Steuerung und Zusammenarbeit von Leistungsmerkmalen im Kommunikationssystem zu gewährleisten.

Aus der Druckschrift EP 1005239 A2 ist ein Verfahren zum Bereitstellen von Diensten in einem aus Teilnetzen verschiedener Betreiber bestehenden Telekommunikationsnetz bekannt. Zur Vermittlung von Diensten ist ein Infrastrukturverwalter vorgesehen, mittels dessen betreiberspezifische Dienststeuereinheiten und Dienstvermittlungsstellen entkoppelt werden. Auf diese Weise können Dienste betreiberunabhängig zur Verfügung gestellt werden.

Weiterhin sind aus der Druckschrift WO 97/16007 ein Verfahren sowie ein Gateway zur Kopplung eines Computernetzes mit einem Telefonnetz und zur Umsetzung zwischen den dort jeweils verwendeten, unterschiedlichen Kommunikationsprotokollen bekannt.

Darüber hinaus ist aus der Druckschrift WO 00/39960 ein Vermittlungsverfahren für netzübergreifende intelligente Netzwerkdienste bekannt.

Bei den in den genannten Druckschriften offenbarten Gegenständen ist jedoch eine Erweiterung der Funktionalität um weitere Dienste oder weitere Leistungsmerkmale aufgrund zusätzlich erforderlicher Protokollumsetzungen mit erheblichem Implementierungsaufwand verbunden.

Es ist Aufgabe der vorliegenden Erfindung ein Verfahren und eine Gatewayeinrichtung zum Umsetzen einer Leistungsmerkmal-Steuersignalisierung beim Übergang zwischen Kommunikationsnetzen mit unterschiedlichen Signalisierungsprotokollen anzugeben, wobei ein leistungsmerkmalspezifisches Umsetzmodul sich beim Koordinierungsmodul registriert durch Übermittlung einer Leistungsmerkmalinformation. Die Leistungsmerkmalinformation gibt dabei an, welche Leistungsmerkmal-Steuerinformationen dem betreffenden Umsetzmodul zuzuordnen sind.

Gelöst wird diese Aufgabe durch ein Verfahren mit den Merkmalen des Patentanspruchs 1 und eine Gatewayeinrichtung mit den Merkmalen des Patentanspruchs 5.

Die Erfindung erlaubt es, eine Leistungsmerkmal-Steuersignalisierung zum Steuern von Leistungsmerkmalen, wie z.B. Anrufumleitung, Konferenzschaltung, Rufweiterschaltung, Rückruf etc., beim Übergang zwischen Kommunikationsnetzen mit unterschiedlichen Signalisierungsprotokollen effizient umzusetzen. Zu diesem Zweck wird aus einer Leistungsmerkmal-Steuermeldung eines Kommunikationsnetzes, die für das jeweilige Signalisierungsprotokoll des betreffenden Kommunikationsnetzes spezifisch ist, eine Leistungsmerkmal-Steuerinformation extrahiert und zu einem leistungsmerkmalneutralen Koordinierungsmodul übermittelt. Das leistungsmerkmalneutrale Koordinierungsmodul ordnet die übermittelte Leistungsmerkmal-Steuerinformation einem leistungsmerkmalspezifischen, d.h. jeweils für ein Leistungsmerkmal spezifisch zuständigen Umsetzmodul zu und vermittelt die Leistungsmerkmal-Steuerinformation zu diesem Umsetzmodul. Das zugeordnete Umsetzmodul setzt die vermittelte Leistungsmerkmal-Steuerinformation dann in eine für ein weiteres der Kommunikationsnetze spezifische Leistungsmerkmal-Steuerinformation um, die in eine weitere protokollspezifische Leistungsmerkmal-Steuermeldung eingefügt und mit dieser in das weitere Kommunikationsnetz übermittelt wird.

Da das leistungsmerkmalspezifische Umsetzmodul logisch vom leistungsmerkmalneutralen Koordinierungsmodul und von den protokollspezifischen Zugriffsmodulen getrennt sind, kann die Funktionalität einer erfindungsgemäßen Gatewayeinrichtung auf sehr einfache Weise erweitert werden. So kann eine Verarbeitung eines zusätzlichen Leistungsmerkmals durch einfaches Hinzufügen eines für dieses Leistungsmerkmal spezifischen, weiteren Umsetzmoduls implementiert werden. Weiterhin kann die Gatewayeinrichtung durch Modifikation, Austausch oder Hinzufügen eines protokollspezifischen Zugriffsmoduls an unterschiedliche Signalisierungsprotokolle angepaßt werden. Eine solche durch Hinzufügen von Funktionsmodulen erzielbare Erweiterbarkeit wird häufig auch als "Plug & Play"-Fähigkeit bezeichnet.

Vorteilhafte Ausführungsformen und Weiterbildungen der Erfindung sind in den abhängigen Ansprüchen angegeben.

Gemäß einer vorteilhaften Ausführungsform der Erfindung können Leistungsmerkmal-Steuerinformationen zwischen den Zugriffsmodulen, dem Koordinierungsmodul und einem Umsetzmodul mittels asynchroner Meldungen übertragen werden. Ein solcher asynchroner Informationsaustausch verringert die Abhängigkeiten zwischen den einzelnen Funktionsmodulen, wodurch die Erweiterbarkeit und die Wartbarkeit der Gatewayeinrichtung wesentlich verbessert werden.

Nach einer vorteilhaften Weiterbildung der Erfindung kann die Leistungsmerkmalinformation eine das betreffende Leistungsmerkmal und die betreffende Umsetzeinrichtung identifizierende Leistungsmerkmalkennung sowie einen Satz von Operationskennungen umfassen. Die Operationskennungen identifizieren dabei jeweils eine Leistungsmerkmal-Steueroperation aus dem Satz von Steueroperationen, die zum Steuern des betreffenden Leistungsmerkmals vorgesehen sind. Die Operationskennungen sind in einer Zuordnungstabelle des Koordinierungsmoduls jeweils mindestens einem Umsetzmodul zugeordnet. Die Registrierung eines Umsetzmoduls kann z.B. beim Systemstart, bei einem Generieren des betreffenden Umsetzmoduls als Instanz einer programmtechnischen Objektklasse und/oder beim Anfordern eines dem betreffenden Umsetzmodul zugeordneten Leistungsmerkmals erfolgen. Mittels einer solchen Zuordnungstabelle können Leistungsmerkmal-Steuerinformationen anhand darin enthaltener Operationskennungen durch einfachen Tabellenzugriff dem jeweils zuständigen Umsetzmodul zugeordnet werden.

Durch das Koordinierungsmodul kann auch eine Statusinformation über einen Status einer Verbindung mindestens einem Umsetzmodul zugeordnet und zu diesem vermittelt werden. Auf diese Weise kann die Umsetzung der Leistungsmerkmal-Steuerinformation abhängig vom Status einer Verbindung, der das betreffende Leistungsmerkmal zugeordnet ist, erfolgen.

Weiterhin kann eine Verbindung auch abhängig von einer im Rahmen der Verbindung übermittelten Leistungsmerkmal-Steuerinformation oder Statusinformation durch ein leistungsmerkmalspezifisches Umsetzmodul gesteuert werden. Zu diesem Zweck kann eine durch das Umsetzmodul gebildete Verbindungssteuerinformation durch das Koordinierungsmodul zu einem Zugriffsmodul vermittelt werden, das die Verbindungssteuerinformation zu einer Verbindungssteuerung weiterleitet.

Ein Ausführungsbeispiel der Erfindung wird nachfolgend anhand der Zeichnung näher erläutert.

Dabei zeigen jeweils in schematischer Darstellung:
Fig 1 eine zwischen ein leitungsvermitteltes und ein paketvermitteltes Kommunikationsnetz geschaltete Gatewayeinrichtung und
Fig 2 eine Leistungsmerkmal-Steuerinformationen enthaltende Verbindungsaufbaumeldung.

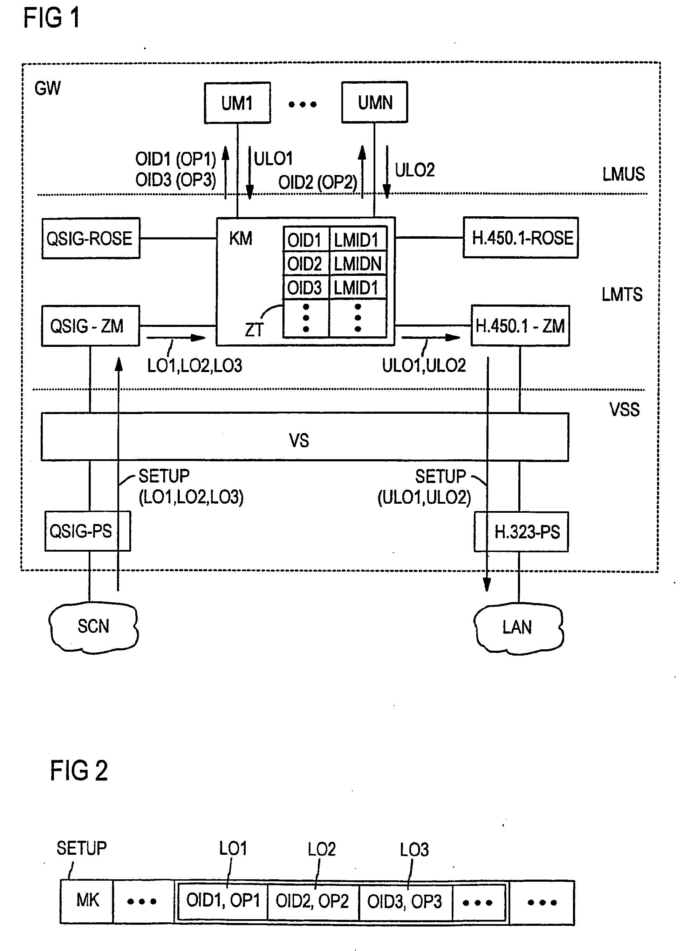

In **Fig 1** ist eine erfindungsgemäße Gatewayeinrichtung GW schematisch dargestellt, die zwischen ein leitungsvermitteltes Kommunikationsnetz SCN (Switched Circuit Network) und ein als sog. Lokales Netz ausgebildetes, paketvermitteltes Kommunikationsnetz LAN (LAN: Local Area Network) geschaltet ist. Für das vorliegende Ausführungsbeispiel sei angenommen, dass zur Verbindungssignalisierung im leitungsvermittelten Kommunikationsnetz SCN die sog. QSIG-Protokollfamilie nach dem ETSI/ECMA-Standard für die Signalisierung am Q-Referenzpunkt vorgesehen ist. Zur Steuerung von Leistungsmerkmalen wird im leitungsvermittelten Kommunikationsnetz SCN außerdem eine Leistungsmerkmal-Steuersignalisierung auf der Basis des QSIG-GFT-Protokolls (QSIG Generic Functional Transport) unterstützt. Im Lokalen Netz LAN erfolgt eine Verbindungssignalisierung gemäß der ITU-T-Empfehlung H.323, wobei Leistungsmerkmale gemäß den ITU-T-Empfehlungen H.450 und H.450.1 gesteuert werden.

Die Gatewayeinrichtung GW weist als Funktionskomponenten eine Verbindungssteuerung VS, eine Protokollsteuerung QSIG-PS für die QSIG-Protokollfamilie, eine Protokollsteuerung H.323-PS für die H.323-Signalisierung, ein protokollspezifisches, leistungsmerkmalneutrales Zugriffsmodul QSIG-ZM zum Zugriff auf die QSIG-GFT-Signalisierung, ein protokollspezifisches, leistungsmerkmalneutrales Zugriffsmodul H.450.1-ZM zum Zugriff auf die H.450.1-Signalisierung, ein zentrales, leistungsmerkmal- und protokollneutrales Koordinierungsmodul KM sowie mehrere Umsetzmodule UM1,...,UMN auf. Die Umsetzmodule UM1,...,UMN sind jeweils für eines von mehreren unterschiedlichen Leistungsmerkmalen, wie z.B. Anrufumleitung, Konferenzschaltung, Rufweiterschaltung, etc., spezifisch zuständig.

Die Verbindungssteuerung VS ist über die Protokollsteuerung QSIG-PS an das leitungsvermittelte Kommunikationsnetz und über die Protokollsteuerung H.323-PS an das Lokale Netz LAN gekoppelt. Weiterhin ist die Verbindungssteuerung VS einerseits über das Zugriffsmodul QSIG-ZM sowie andererseits über das Zugriffsmodul H.450.1-ZM mit dem Koordinierungsmodul KM gekoppelt. An das Koordinierungsmodul KM sind ferner die leistungsmerkmalspezifischen Umsetzmodule UM1,...,UMN sowie ein für das QSIG-Protokoll spezifisches Kontrollmodul QSIG-ROSE und ein für das H.450.1-Protokoll spezifisches Kontrollmodul H.450.1-ROSE (ROSE: Remote Operation Service Entity) angekoppelt.

Die Funktionskomponenten der Gatewayeinrichtung GW sind in unterschiedliche logische Schichten, nämlich eine Verbindungssteuerungsschicht VSS, eine Leistungsmerkmal-Transportschicht LMTS und eine Leistungsmerkmal-Umsetzschicht LMUS separiert. Die Abgrenzung dieser logischen Schichten ist in Fig 1 durch punktierte Linien angedeutet. Der Verbindungssteuerungsschicht VSS sind dabei die Verbindungssteuerung VS sowie die Protokollsteuerungen QSIG-PS und H.323-PS zugeordnet. Der Leistungsmerkmal-Transportschicht LMTS sind weiterhin das Koordinierungsmodul KM, die Kontrollmodule QSIG-ROSE und H.450.1-ROSE sowie die.Zugriffsmodule QSIG-ZM und H.450.1-ZM zugehörig. Die Zugriffsmodule QSIG-ZM und H.450.1-ZM fungieren unter anderem als logisches Bindeglied und Synchronisationseinrichtung zwischen der Verbindungssignalisierung und der Leistungsmerkmal-Signalisierung. Die Kontrollmodule QSIG-ROSE und H.450.1-ROSE dienen zum Überwachen der von den Leistungsmerkmal-Steuermeldungen ausgelösten Transaktionen in der Leistungsmerkmal-Transportschicht LMTS. Der Leistungsmerkmal-Umsetzschicht LMUS sind schließlich die Umsetzmodule UM1,...,UMN zugeordnet. Aufgrund der Separierung der Funktionskomponenten in einzelne logische Schichten kann die Funktionalität der Gatewayeinrichtung GW auf sehr einfache Weise erweitert werden. So kann die Verarbeitung eines zusätzlichen Leistungsmerkmals durch einfaches Hinzufügen eines für dieses Leistungsmerkmal spezifischen, weiteren Umsetzmoduls implementiert werden. Weiterhin kann die Gatewayeinrichtung GW durch Modifikation, Austausch oder Hinzufügen eines protokollspezifischen Zugriffsmoduls an unterschiedliche Signalisierungsprotokolle in den angekoppelten Kommunikationsnetzen angepaßt werden. Die modulare Schichtenarchitektur unterstützt ferner eine Interaktion zwischen den Leistungsmerkmalen in generischer Weise.

Das zentrale Koordinierungsmodul KM, die Zugriffsmodule QSIG-ZM und H.450.1-ZM, die Kontrollmodule QSIG-ROSE und H.450.1-ROSE sowie die Umsetzmodule UM1,...,UMN sind vorzugsweise jeweils als eine Instanz einer programmtechnischen Objektklasse realisiert. Ein Informationsaustausch zwischen den Instanzen erfolgt mittels asynchroner Meldungen. Während das Koordinierungsmodul KM vorzugsweise beim Systemstart als Klasseninstanz initialisiert wird, erfolgt die Initialisierung der übrigen Klasseninstanzen vorzugsweise beim erstmaligen Empfang einer Leistungsmerkmal-Steuermeldung durch die Verbindungssteuerung VS.

Bei der Initialisierung der Umsetzmodule UM1,...,UMN registrieren sich diese beim Koordinierungsmodul KM. Im Rahmen der Registrierung eines Umsetzmoduls UM1,...,UMN übermittelt dieses eine Registrierungsmeldung (nicht dargestellt) zum Koordinierungsmodul KM. Die Registrierungsmeldung enthält vorzugsweise eine Leistungsmerkmalkennung LMID1,...,LMIDN, die das betreffende Umsetzmodul bzw. das von diesem zu verarbeitende Leistungsmerkmal identifiziert, sowie einen Satz von Operationskennungen OID1,OID2,OID3,..., durch die diejenigen Leistungsmerkmal-Steueroperationen identifiziert werden, die zum Steuern des betreffenden Leistungsmerkmals vorgesehen sind. Der Satz von Operationskennungen und die Leistungsmerkmalkennung einer Registrierungsmeldung werden in einer Zuordnungstabelle ZT des Koordinierungsmoduls KM einander zugeordnet abgespeichert. Für das vorliegende Ausführungsbeispiel sei angenommen, dass das Umsetzmodul UM1 mit der Leistungsmerkmalkennung LMID1 und den Operationskennungen OID1, OID3 und das Umsetzmodul UMN mit der Leistungsmerkmalkennung LMIDN und der Operationskennung OID2 in der Zuordnungstabelle ZT registriert sind.

Im Folgenden wird eine Umsetzung einer Leistungsmerkmal-Steuersignalisierung des leitungsvermittelten Kommunikationsnetzes SCN in eine funktional äquivalente Leistungsmerkmal-Steuersignalisierung für das Lokale Netz LAN betrachtet. Die gewählte Richtung der Umsetzung ist hierbei nur als beispielhaft aufzufassen. Dementsprechend gelten die nachfolgenden Ausführungen sinngemäß auch für eine Umsetzung in entgegengesetzter Richtung.

Im vorliegenden Ausführungsbeispiel wird im Rahmen der Leistungsmerkmal-Steuersignalisierung eine QSIG-Verbindungsaufbaumeldung SETUP als protokollspezifische Leistungsmerkmal-Steuermeldung vom leitungsvermittelten Kommunikationsnetz SCN zur Gatewayeinrichtung GW übermittelt.

Wie in **Fig 2** schematisch dargestellt, enthält die Verbindungsaufbaumeldung SETUP - abgesehen von ihrem Meldungskopf MK - einen generischen Datencontainer zur Aufnahme von Signalisierungselementen, die im vorliegenden Ausführungsbeispiel durch protokollspezifisch kodierte Leistungsmerkmal-Steuerinformationen LO1, LO2, LO3,... gebildet werden. Jede der Leistungsmerkmal-Steuerinformationen LO1, LO2, LO3, ... setzt sich aus einer eine Leistungsmerkmal-Steueroperation identifizierenden Operationskennung OID1,OID2,OID3,... und einem jeweils zugehörigen Satz von Operationsparametern OP1,OP2,OP3,... zusammen.

Anstelle der Verbindungsaufbaumeldung SETUP können auch andere QSIG-Signalisierungsmeldungen, die über einen generischen Datencontainer verfügen, als Leistungsmerkmal-Steuermeldungen verwendet werden.

Die von der Gatewayeinrichtung GW empfangene Verbindungsaufbaumeldung SETUP wird von der Protokollsteuerung QSIG-PS zur Verbindungssteuerung VS weitergeleitet und von dieser als Leistungsmerkmal-Steuermeldung erkannt. Die Verbindungssteuerung VS veranlaßt infolgedessen eine Initialisierung der Zugriffsmodule QSIG-ZM und H.450.1-ZM, der Kontrollmodule QSIG-ROSE und H.450.1-ROSE sowie der Umsetzmodule UM1,...,UMN als Instanzen von programmtechnischen Objektklassen.

Das protokollspezifische Zugriffsmodul QSIG-ZM extrahiert daraufhin aus der protokollspezifischen Verbindungsaufbaumeldung SETUP die Leistungsmerkmal-Steuerinformationen LO1, LO2 und LO3 und dekodiert diese in ein protokollneutrales Format. Die dekodierten Leistungsmerkmal-Steuerinformationen LO1, LO2 und LO3 werden anschließend separat innerhalb von asynchronen Meldungen zum Koordinierungsmodul KM übertragen. Außerdem wird eine die aufzubauende Verbindung identifizierende Verbindungskennung (nicht dargestellt) zum Koordinierungsmodul KM übermittelt, anhand der die Leistungsmerkmal-Steuerinformationen LO1, LO2 und LO3 der aufzubauenden Verbindung zugeordnet werden.

Im Koordinierungsmodul KM werden die in den Leistungsmerkmal-Steuerinformationen LO1, LO2 und LO3 enthaltenen Operationskennungen OID1, OID2 und OID3 zusammen mit dem jeweiligen Satz von Operationsparametern OP1, OP2 bzw. OP3 ausgelesen. Anschließend wird durch Zugriff auf die Zuordnungstabelle ZT die einer jeweiligen Operationskennung OID1, OID2 bzw. OID3 zugeordnete Leistungsmerkmalkennung, hier LMID1 bzw. LMIDN, und damit das jeweils zuständige Umsetzmodul, hier UM1 bzw. UMN, ermittelt. Dementsprechend wird die Operationskennung OID1 mit den Operationsparametern OP1 und die Operationskennung OID3 mit den Operationsparametern OP3 zum Umsetzmodul UM1 vermittelt. Analog dazu wird die Operationskennung OID2 und die mit dieser Operationskennung OID2 übermittelten Operationsparameter OP2 zum Umsetzmodul UMN vermittelt. Im Umsetzmodul UM1 wird daraufhin die durch die Operationskennung OID1 identifizierte Leistungsmerkmal-Steueroperation mit den Operationsparametern OP1 und die durch die Operationskennung OID3 identifizierte Leistungsmerkmal-Steueroperation mit den Operationsparametern OP3 in eine oder mehrere funktional äquivalente Leistungsmerkmal-Steuerinformationen ULO1 für das Lokale Netz LAN umgesetzt. Auf gleiche Weise wird im Umsetzmodul UMN die durch die Operationskennung OID2 identifizierte Leistungsmerkmal-Steueroperation zusammen mit ihren Operationsparametern OP2 in eine oder mehrere funktional äquivalente Leistungsmerkmal-Steuerinformationen ULO2 für das Lokale Netz LAN umgesetzt.

Die umgesetzten Leistungsmerkmal-Steuerinformationen ULO1 und ULO2 werden mittels asynchroner Meldungen zum Koordinierungsmodul KM übertragen. Durch das Koordinierungsmodul KM werden die Leistungsmerkmal-Steuerinformationen ULO1 und ULO2 der durch die Verbindungskennung identifizierten Verbindung zugeordnet und so zum Zugriffsmodul H.450.1-ZM vermittelt. Das Zugriffsmodul H.450.1-ZM kodiert die umgesetzten Leistungsmerkmal-Steuerinformationen ULO1 und ULO2 anschließend in ein H.450.1-spezifisches Format. In diesem Format werden die umgesetzten Leistungsmerkmal-Steuerinformationen ULO1 und ULO2 in eine für das Lokale Netz LAN spezifische Verbindungsaufbaumeldung SETUP eingefügt, die von der Verbindungssteuerung VS schließlich über die Protokollsteuerung H.323-PS in das Lokale Netz LAN übermittelt wird.

## Patentansprüche

1. Verfahren zum Umsetzen einer Leistungsmerkmal-Steuersignalisierung beim Übergang zwischen einem ersten Kommunikationsnetz (SCN) mit einem ersten Signalisierungsprotokoll und einem zweiten Kommunikationsnetz (LAN) mit einem zweiten, zum ersten unterschiedlichen Signalisierungsprotokoll, bei dem
a) aus einer für das erste Signalisierungsprotokoll spezifischen Leistungsmerkmal-Steuermeldung (SETUP) des ersten Kommunikationsnetzes (SCN) durch ein für das erste Signalisierungsprotokoll spezifisches, erstes leitungsmerkmalneutrales Zugriffsmodul (QSIG-ZM) Leistungsmerkmal-Steuerinformation (LO1, LO2, LO3) extrahiert und zu einem leistungsmerkmal- und protokollneutralen Koordinierungsmodul (KM) übermittelt wird,
b) die extrahierte Leistungsmerkmal-Steuerinformation (LO1, LO2, LO3) durch das Koordinierungsmodul (KM) mindestens einem leistungsmerkmalspezifischen Umsetzmodul (UM1,...,UMN) zugeordnet und zu diesem mindestens einen Umsetzmodul (UM1,...,UMN) vermittelt wird,
c) durch das mindestens eine Umsetzmodul (UM1,...,UMN) die vermittelte Leistungsmerkmal-Steuerinformation (LO1, LO2, LO3) in für das zweite Kommunikationsnetz (LAN) spezifische Leistungsmerkmal-Steuerinformation (ULO1, ULO2) umgesetzt wird,
d) die umgesetzte Leistungsmerkmal-Steuerinformation (ULO1, ULO2) durch ein für das zweite Signalisierungsprotokoll spezifisches, zweites leistungsmerkmalneutrales Zugriffsmodul (H.450.1-ZM) in eine für das zweite Signalisierungsprotokoll spezifische Leistungsmerkmal-Steuermeldung (SETUP) eingefügt wird, die in das zweite Kommunikationsnetz (LAN) übermittelt wird, und
e) ein leistungsmerkmalspezifisches Umsetzmodul (UM1,...,UMN) sich beim Koordinierungsmodul (KM) durch Übermittlung einer Leistungsmerkmalinformation registriert, die angibt, welche Leistungsmerkmal-Steuerinformationen (LO1, LO2, LO3) dem betreffenden Umsetzmodul (UM1,...,UMN) zuzuordnen sind.

2. Verfahren nach Anspruch 1,
**dadurch gekennzeichnet,**
**dass** Leistungsmerkmal-Steuerinformationen (LO1, LO2, LO3, ULO1, ULO2) zwischen den Zugriffsmodulen (QSIG-ZM, H.450.1-ZM), dem Koordinierungsmodul (KM) und einem Umsetzmodul (UM1,...,UMN) mittels asynchroner Meldungen übertragen werden.

3. Verfahren nach einem der vorhergehenden Ansprüche,
**dadurch gekennzeichnet,**
**dass** durch das Koordinierungsmodul (KM) eine Statusinformation über einen Status einer Verbindung mindestens einem Umsetzmodul (UM1,...,UMN) zugeordnet und zu diesem vermittelt wird.

4. Verfahren nach einem der vorhergehenden Ansprüche,
**dadurch gekennzeichnet,**
**dass** durch ein Umsetzmodul (UM1,...,UMN) abhängig von einer auf eine Verbindung bezogenen Leistungsmerkmal-Steuerinformation (LO1, LO2, LO3) und/oder einer Statusinformation über einen Status der Verbindung eine Verbindungssteuerinformation zum Steuern der Verbindung gebildet und durch das Koordinierungsmodul (KM) zu einem Zugriffsmodul (QSIG-ZM, H.450.1-ZM) vermittelt wird.

5. Gatewayeinrichtung (GW) zum Umsetzen einer Leistungsmerkmal-Steuersignalisierung (LO1, LO2, LO3) beim Übergang zwischen einem ersten Kommunikationsnetz (SCN) mit einem ersten Signalisierungsprotokoll und einem zweiten Kommunikationsnetz (LAN) mit einem zweiten, zum ersten unterschiedlichen Signalisierungsprotokoll, mit
a) je einem für das jeweilige Signalisierungsprotokoll des ersten und des zweiten Kommunikationsnetzes spezifischen, leistungsmerkmalneutralen Zugriffsmodul (QSIG-ZM, H.450.1-ZM) zum Extrahieren und Einfügen von Leistungsmerkmal-Steuerinformation (LO1, LO2, LO3, ULO1, ULO2) aus bzw. in protokollspezifische Leistungsmerkmal-Steuermeldungen (SETUP) des jeweiligen Kommunikationsnetzes (SCN, LAN),
b) mindestens einem leistungsmerkmalspezifischen Umsetzmodul (UM1,...,UMN) zum Umsetzen von aus dem ersten Kommunikationsnetz (SCN) extrahierter Leistungsmerkmal-Steuerinformation (LO1, LO2, LO3) in für das zweite Kommunikationsnetz (LAN) spezifische Leistungsmerkmal-Steuerinformation (ULO1, ULO2), und
c) einem leistungsmerkmal- und protokollneutralen Koordinierungsmodul (KM) zum Zuordnen einer extrahierten Leistungsmerkmal-Steuerinformation (LO1, LO2, LO3) zu mindestens einem leistungsmerkmalspezifischen Umsetzmodul (UM1,...,UMN) und zum Vermitteln einer Leistungsmerkmal-Steuerinformation (LO1, LO2, LO3, UL1, ULO2) zwischen einem zugeordneten leistungsmerkmalspezifischen Umsetzmodul (UM1,...,UMN) und den Zugriffsmodulen (QSIG-ZM, H.450.1-ZM), wobei der leistungsmerkmalspezifisches Umsetzmodul (UM1,..., UMN) sich beim Koordinierungsmodul (KM) durch Übermittlung einer Leistungsmerkmalinformation registriert, die angibt, welche Leistungsmerkmal-Steuerinformationen (LO1, LO2, LO3) dem betreffenden Umsetzmodul (UM1,..., UMN) zuzuordnen sind, und wobei
d) das Koordinierungsmodul (KM) eine Zuordnungstabelle (ZT) aufweist, in der in Leistungsmerkmal-Steuerinformationen (LO1, LO2, LO3) enthaltene Operationskennungen (OID1, OID2, OID3), die jeweils eine Leistungsmerkmal-Steueroperation identifizieren, jeweils mindestens einem leistungsmerkmalspezifischen Umsetzmodul (UM1,...,UMN) zugeordnet sind.

6. Gatewayeinrichtung nach Anspruch 5,
**gekennzeichnet durch**
ein Zugriffsmodul (QSIG-ZM) zum Zugriff auf ein leitungsvermitteltes Kommunikationsnetz (SCN) und ein Zugriffsmodul (H.450.1-ZM) zum Zugriff auf ein paketvermitteltes Kommunikationsnetz (LAN) sowie Umsetzeinrichtungen (UM1,...,UMN) zum Umsetzen zwischen paketorientierter (ULO1, ULO2) und leitungsorientierter (LO1, LO2, LO3) Leistungsmerkmal-Steuerinformation.

7. Gatewayeinrichtung nach Anspruch 5 oder 6,
**dadurch gekennzeichnet,**
**dass** das Koordinierungsmodul (KM) durch eine einzelne Instanz einer programmtechnischen Objektklasse realisiert ist.

8. Gatewayeinrichtung nach einem der Ansprüche 5 bis 7,
**dadurch gekennzeichnet,**
**dass** die Zugriffsmodule (QSIG-ZM, H.450.1-ZM) und/oder die Umsetzmodule (UM1,...,UMN) jeweils durch eine Instanz einer programmtechnischen Objektklasse realisiert sind.

9. Gatewayeinrichtung nach Patentanspruch 8,
**gekennzeichnet durch**
bei Empfang einer Leistungsmerkmal-Steuermeldung (SETUP) im Rahmen einer Verbindung gebildete Instanzen der Zugriffsmodule (QSIG-ZM, H.450.1-ZM).

## Claims

1. Method for converting service feature control signalling information at the gateway between a first communication network (SCN) with a first signalling protocol and a second communication network (LAN) with a second signalling protocol which differs from the first protocol, in which
a) service feature control information (LO1, LO2, LO3) is extracted from a protocol-specific service feature control message (SETUP) of the first communications network (SCN) by a first service feature neutral access module QSIG-ZM) specific to the first signalling protocol and transmitted to a service feature-neutral and protocol-neutral coordination module (KM),
b) the extracted service feature control information (LO1, LO2, LO3) is assigned by the coordination module (KM) to at least one service feature-specific conversion module (UM1,...,UMN) and relayed to this at least one conversion module (UM1,...,UMN),
c) the relayed service feature control information (LO1, LO2, LO3) is converted by the at least one conversion module (UM1,...,UMN) into service feature control information (ULO1, ULO2) specific to the second communications network (LAN),
d) the converted service feature control information (ULO1, ULO2) is inserted by an access module (H.450.1-ZM) specific to the second signalling protocol into a service feature control message (SETUP) specific to the second signalling protocol which is transmitted into the second communications network (LAN), and
e) a service feature-specific conversion module (UM1,...,UMN) registers with the coordination module (KM) by transmitting service feature information that specifies which service feature control information (LO1, LO2, LO3) is to be assigned to the relevant conversion module (UM1,...,UMN).

2. Method according to claim 1,
**characterised in that**
service feature control information (LO1, LO2, LO3, ULO1, ULO2) is transferred between the access modules (QSIG-ZM, H.450.1-ZM), the coordination module (KM) and a conversion module (UM1,...,UMN) by means of asynchronous messages.

3. Method according to one of the preceding claims,
**characterised in that**
status information about the status of a connection is assigned by the coordination module (KM) to at least one conversion module (UM1,...,UMN) and is relayed to this module.

4. Method according to one of the preceding claims,
**characterised in that**
connection control information for controlling the connection is formed by a conversion module (UM1,...,UMN) as a function of service feature control information (LO1, LO2, LO3) relating to a connection and/or status information about the status of the connection and relayed by the coordination module (KM) to an access module (QSIG-ZM, H.450.1-ZM).

5. Gateway device (GW) for converting service feature control signalling information (LO1, LO2, LO3) at the gateway between a first communications network (SCN) with a first signalling protocol and a second communications network (SCN) with a second signalling protocol which differs from the first signalling protocol, with
a) one specific protocol-neutral access module (QSIG-ZM, H.450.1-ZM) for each of the signalling protocols of the first and the second communications networks (SCN, LAN) for extracting and inserting service feature control information (LO1, LO2, LO3, ULO1, ULO2) out of and into protocol-specific service feature control messages (SETUP) of the respective communications network (SCN, LAN),
b) at least one service feature-specific conversion module (UM1,...,UMN) for converting service feature control information (LO1, LO2, LO3) extracted from the first communications network (SCN) into service feature control information (ULO1, ULO2) specific to the second communications network (LAN), and
c) a service feature-neutral and protocol-neutral coordination module (KM) for assigning an extracted item of service feature control information (LO1, LO2, LO3) to at least one service feature-specific conversion module (UM1,...,UMN) and for transmitting an item of service feature control information (LO1, LO2, LO3, UL1, ULO2} between an assigned service feature-specific conversion module (UM1,...,UMN) and the access modules (QSIG-ZM, H.450.1-ZM), with the service feature-specific conversion module (UM1,...,UMN) registering with the coordination module (KM) by transferring service feature information which specifies which service feature control information (LO1, LO2, LO3) is to be assigned to the conversion module (UM1,...,UMN) concerned, and with
d) the coordination module (KM) featuring a coordination table (ZT), in which operation codes (OID1, OID2, OID3) contained in the service feature control information (LO1, LO2, LO3), each of which identifies a service feature control operation, are each assigned to at least one service feature-specific conversion module (UM1,...,UMN)

6. Gateway device according to claim 5,
**characterised by**
an access module (QSTG-ZM) for accessing a circuit-switched communications network (SCN) and an access module (H.450.1-ZM) for accessing a packet-switched communications network (LAN), as well as
conversion devices (UM1,...,UMN) for converting between packet-oriented (ULO1, ULO2) and circuit-oriented (LO1, LO2, LO3) service feature control information.

7. Gateway device according to one of the claims 5 to 6,
**characterized in that**,
the coordination module (KM) is implemented by an individual instance of a programmed object class.

8. Gateway device according to one of the claims 5 to 7,
**characterised in that**
the access modules (QSIG-ZM, H.450.1-ZM} and/or the conversion modules (UM1,...,UMN) are each implemented by an instance of a programmed object class.

9. Method for a gateway device according to claim 8,
**characterised by**,
instances of the access modules (QSIG-ZM, H.450.1ZM) formed on receipt of a service feature control message (SETUP) in the course of a connection.

## Revendications

1. Procédé permettant de convertir une signalisation de commande de complément de service lors du transfert entre un premier réseau de communication (SCN) avec un premier protocole de signalisation et un deuxième réseau de communication (LAN) avec un deuxième protocole de signalisation, différent du premier, dans lequel
a) un premier module d'accès (QSIG-ZM), spécifique au premier protocole de signalisation et neutre au regard des compléments de service, extrait d'un message de commande de compléments de service (SETUP) du premier réseau de communication (SCN), spécifique au premier protocole de signalisation, une information de commande de compléments de service (LO1, LO2, LO3) et la transmet à un module de coordination neutre au regard des compléments de service et des protocoles,
b) l'information de commande de compléments de service extraite (LO1, LO2, LO3) est affectée par le module de coordination (KM) à au moins un module de conversion (UM1, ..., UMN) spécifique à un complément de service et est commutée vers cet au moins un module de conversion (UM1, ..., UMN),
c) l'information de commande de compléments de service commutée (LO1, LO2, LO3) est convertie par l'au moins un module de conversion (UM1, ..., UMN) en une information de commande de compléments de service (ULO1, ULO2) spécifique au deuxième réseau de communication (LAN),
d) l'information de commande de compléments de service convertie (ULO1, ULO2) est insérée par un deuxième module d'accès (H.450.1-ZM) neutre au regard des compléments de service et spécifique au deuxième protocole de signalisation dans un message de commande de compléments de service (SETUP) spécifique au deuxième protocole de signalisation, lequel message est transmis vers le deuxième réseau de communication (LAN), et
e) un module de conversion spécifique à un complément de service (UM1, ..., UMN) s'enregistre auprès du module de coordination (KM) par transmission d'une information de complément de service, laquelle indique quelles informations de commande de compléments de service (LO1, LO2, LO3) sont à affecter au module de conversion concerné (UM1, ..., UMN).

2. Procédé selon la revendication 1, **caractérisé en ce que** des informations de commande de compléments de service (LO1, LO2, LO3, ULO1, ULO2) sont transmises entre les modules d'accès (QSIG-ZM, H.450.1-ZM), le module de coordination (KM) et un module de conversion (UM1, ..., UMN) au moyen de messages asynchrones.

3. Procédé selon l'une des revendications précédentes, **caractérisé en ce que**, par le module de coordination (KM), une information de statut sur un statut d'une liaison est affectée au moins à un module de conversion (UM1, ..., UMN) et est commutée vers celui-ci.

4. Procédé selon l'une des revendications précédentes, **caractérisé en ce qu'**une information de commande de liaison pour commander une liaison est constituée par un module de conversion (UM1, UMN) en fonction d'une information de commande de compléments de service (LO1, LO2, LO3) relative à la liaison et/ou d'une information de statut sur un statut de la liaison et est commutée vers un module d'accès (QSIG-ZM, H.450.1-ZM) par le module de coordination (KM).

5. Dispositif passerelle (GW) permettant de convertir une signalisation de commande de complément de service (LO1, LO2, LO3) lors du transfert entre un premier réseau de communication (SCN) avec un premier protocole de signalisation et un deuxième réseau de communication (LAN) avec un deuxième protocole de signalisation, différent du premier, avec
a) respectivement un module d'accès (QSIG-ZM, H.450.1-ZM) spécifique au protocole de signalisation respectif des premier et deuxième réseaux de communication et neutre au regard des compléments de service, pour extraire et insérer une information de commande de compléments de service (LO1, LO2, LO3, ULO1, ULO2) hors de resp. dans des messages de commande de compléments de service (SETUP) du réseau de communication respectif (SCN, LAN), spécifiques aux protocoles,
b) au moins un module de conversion (UM1, ..., UMN) spécifique à un complément de service pour convertir une information de commande de compléments de service (LO1, LO2, LO3) extraite du premier réseau de communication (SCN) en une information de commande de compléments de service (ULO1, ULO2) spécifique au deuxième réseau de communication (LAN) et
c) un module de coordination (KM) neutre au regard des compléments de service et des protocoles pour affecter une information de commande de compléments de service extraite (LO1, LO2, LO3) à au moins un module de conversion spécifique à un complément de service (UM1, ..., UMN) et pour commuter une information de commande de compléments de service (LO1, LO2, LO3, ULO1, ULO2) entre un module de conversion (UM1, ..., UMN) associé spécifique à un complément de service, et les modules d'accès (QSIG-ZM, H.450.1-ZM), le module de conversion (UM1, ..., UMN) spécifique à un complément de service s'enregistrant auprès du module de coordination (KM) par transmission d'une information de complément de service qui indique quelles sont les informations de commande de compléments de service (LO1, LO2, LO3) à affecter au module de conversion (UM1, ..., UMN) concerné, et
d) le module de coordination (KM) comportant une table de concordances (ZT) dans laquelle des identifiants d'opérations (OID1, OID2, OID3) contenus dans des informations de commande de compléments de service (LO1, LO2, LO3) et identifiant chacun une opération de commande de compléments de service sont affectés chacun au moins à un module de conversion spécifique à un complément de service.

6. Dispositif passerelle selon la revendication 5, **caractérisé par** un module d'accès (QSIG-ZM) pour accéder à un réseau de communication à lignes commutées (SCN) et un module d'accès (H.450.1-ZM) pour accéder à un réseau de communication à commutation de paquets (LAN) ainsi que des dispositifs de conversion (UM1, ..., UMN) permettant la conversion entre information de commande de compléments de service orientée paquets (ULO1, ULO2) et information de commande de compléments de service orientée lignes (LO1, LO2, LO3).

7. Dispositif passerelle selon la revendication 5 ou 6, **caractérisé en ce que** le module de coordination (KM) est réalisé par une seule instance d'une classe d'objets de la technique de programmation.

8. Dispositif passerelle selon l'une des revendications 5 à 7, **caractérisé en ce que** les modules d'accès (QSIG-ZM, H.450.1-ZM) et/ou les modules de conversion (UM1, ..., UMN) sont respectivement réalisés par une instance d'une classe d'objets de la technique de programmation.

9. Dispositif passerelle selon la revendication 8, **caractérisé par** des instances des modules d'accès (QSIG-ZM, H.450.1-ZM) constituées à la réception d'un message de commande de compléments de service (SETUP) dans le cadre d'une liaison.
